# EUROPÄISCHE PATENTSCHRIFT

(11) **EP 2 069 125 B1**
(45) Veröffentlichungstag und Bekanntmachung des Hinweises auf die Patenterteilung: **02.12.2020**
(21) Anmeldenummer: 07818269.8
(22) Anmeldetag: 20.09.2007
(51) Int. Cl.: B29C 48/06

(54) **SCHREIB-, ZEICHEN-, MAL- UND/ODER KOSMETIKSTIFT**
PENCIL FOR WRITING, DRAWING, PAINTING AND/OR COSMETICS PURPOSES
CRAYON POUR ÉCRITURE, DESSIN, PEINTURE ET/OU COSMÉTIQUE

(30) Priorität: 29.09.2006 DE 102006046491
(43) Veröffentlichungstag der Anmeldung: 17.06.2009
(73) Patentinhaber: STAEDTLER Mars GmbH & Co. KG, 90427 Nürnberg (DE)
(72) Erfinder: THIES, Andreas, 91090 Effeltrich (DE)
(86) Internationale Anmeldenummer: PCT/EP2007/008177
(87) Internationale Veröffentlichungsnummer: WO 2008/040449

(56) Entgegenhaltungen:
- DE-A1-102004 021 048
- US-A- 3 551 064

## Beschreibung

Die Erfindung betrifft einen Schreib-, Zeichen-, Mal- und/oder Kosmetikstift nach dem Oberbegriff des Hauptanspruchs.

Schreib-, Zeichen-, Mal- und/oder Kosmetikstifte, bei welchen eine abstrichfähige Mine von einem Festigkeit gebenden Material umhüllt ist, sind prinzipiell bekannt. Die Mine ist in diesem Fall verschiebesicher in der Umhüllung gehaltert.

Bekannt sind Minen, welche in genutete Holzbrettchen eingeleimt sind, wobei die Holzoberfläche, falls gewünscht, durch dekorative Beschichtungen veredelt wird. Als nachteilig ist bei derartigen Stiften anzusehen, dass die Minen mit edlen Hölzern ummantelt sind, wodurch die natürlichen Holzvorkommen verbraucht werden. Zudem ist es als nachteilig anzusehen, dass ein aufwendiges und teures Herstellverfahren von Nöten ist, um derartige Stifte in guter Qualität herzustellen.

Weiter sind co- bzw. triextrudierte Stifte bekannt, bei welchen ein Minenmaterial mit einer Umhüllung versehen ist, wobei in der Regel die Mine als auch die Umhüllung häufig als polymergebundenes Material vorliegt. Bei der Ausgestaltung der spitzfähigen Umhüllung besteht ein Interessenkonflikt zwischen guter Spitzfähigkeit einerseits und hoher Biegebruchfestigkeit und Steifigkeit andererseits, wie es benötigt wird, um die spröde Mine gegen Bruch wirksam zu schützen.
Ein derartiger extrudierter Stift ist beispielsweise aus der EP 0 505 262 B1 bekannt. Der darin beschriebene Stift besteht aus geschäumten Polystyrolen in der Umhüllung und einer flexiblen polystyrol-gebundenen Mine.
Bei derartigen Stiften ist es als nachteilig anzusehen, dass der Mantel bzw. die Minenumhüllung beim Anspitzen keinen holztypischen Charakter aufzeigt und die Mine in der Flexibilität deutlich geringer ausgebildet ist als der Mantel, was zur Folge hat, dass die Mine bei Stiftbiegung leicht und schnell bricht, was für den Benutzer den Stiftnutzen reduziert oder gar in Frage stellt.

Weiter ist aus der US 3,551,064 ein extrudierter Stift bekannt, bei welchem Mine und Holzersatz von einer Traghülse umgeben sind.

In der DE 102004021048 A1 wird ein Stift beschrieben, bei welchem eine Mine mit einer Ummantelung umhüllt ist, welche sich aus einem Polymer und Holzfasern zusammensetzt, wobei der Gesamtstift mit einer Beschichtung überzogen ist. **Aufgabe** der Erfindung ist es daher, einen Stift zum Schreiben, Zeichnen, Malen und/oder für Kosmetikzwecke zu schaffen, der die eingangs genannten Nachteile nicht aufweist und der insbesondere den Interessenkonflikt zwischen guter Spitzfähigkeit und hoher Biegebruchfestigkeit und Steifigkeit der Umhüllung sicher löst.

Diese Aufgabe wird mit den kennzeichnenden Merkmalen gemäß Anspruch 1 gelöst. Vorteilhafte Ausgestaltungen ergeben sich aus den untergeordneten Ansprüchen.

Unter Stifte zum Schreiben-, Zeichnen, Malen und/oder für Kosmetikzwecke versteht man Minen, die von spitzfähigen Materialien ummantelt sind. Beispiele hierfür sind Blei-, Farb- und Kosmetikstifte.

Die gestellte Aufgabe wird durch einen Schreib-, Zeichen-, Mal- und/oder Kosmetikstift wie in Anspruch 1 definiert gelöst. Dabei weist der erfindungsgemäße Stift eine farbabgebende Mine und eine die Mine umgebende Minenhalterung auf, wobei die Minenhalterung eine Umhüllung in Form eines Holzersatzwerkstoffs umfasst, welcher die Mine umgibt, wobei die Mine und die Minenhalterung zueinander verschiebesicher gehaltert sind. Die Minenhalterung weist des Weiteren eine Traghülse auf, wobei die Traghülse den Holzersatzwerkstoff umgibt. Hierbei weist die Traghülse einen gleichen oder höheren E-Modul sowie eine höhere Biegebruchfestigkeit auf wie der Holzersatzwerkstoff.

Hierbei sind der Holzersatzwerkstoff sowie die Traghülse konzentrisch zur Mine angeordnet. Eine konzentrische Anordnung stellt sicher, dass der Stift, unabhängig von der Schreibstellung, unter Belastung in allen Ausrichtungen die gleiche Festigkeits- und Schreibeigenschaften aufweist Bevorzugte Ausführungsformen des Stiftes der Erfindung werden in den abhängigen Ansprüchen definiert.

Da der Holzersatzwerkstoff aufgrund der Traghülse nur einen geringeren Biegebruchfestigkeitsanteil zur Gesamtbruchfestigkeit des Stiftes beitragen muss, kann auf diese Weise ein Schwerpunkt bei der Ausgestaltung des Holzersatzwerkstoffs auf die Eigenschaften Spitzfähigkeit und Holzähnlichkeit ausgerichtet werden.

Die Mine kann beispielhaft als eine Mantelmine ausgebildet sein. In diesem Fall ist die Mine wie aus der DE 10 2005 004 175 bekannt, aufgebaut.

Die Traghülse kann auf ihrer Oberfläche Beschichtungen aufweisen, die als separate Dekorschicht, wie beispielsweise ein Streifendesign oder als haptische Schichten ausgebildet sind.

Mit einer geeigneten Einfärbung kann die Traghülse zugleich als Dekorträger des Stiftes fungieren.

Hier sei angemerkt, dass das Gesamtsystem Stift mit einer Traghülse im weitesten Sinn dem funktionellen Aufbau eines technischen Schreibgerätes, wie beispielsweise einem Faserschreiber oder Kugelschreiber entspricht.

Anhand der nachfolgenden Figuren wird der erfindungsgemäße Stift nachfolgend näher beschrieben.
**Figur 1****:** Querschnitt senkrecht zur Längsachse durch einen erfindungsgemäßen Stift;
**Figur 2****:** Längsschnitt durch einen erfindungsgemäßen Stift gemäß Figur 1;
**Figur 3****:** Stift nach Figur 2 mit Spannungsdiagramm aufgrund einer anliegenden Biegebelastung;

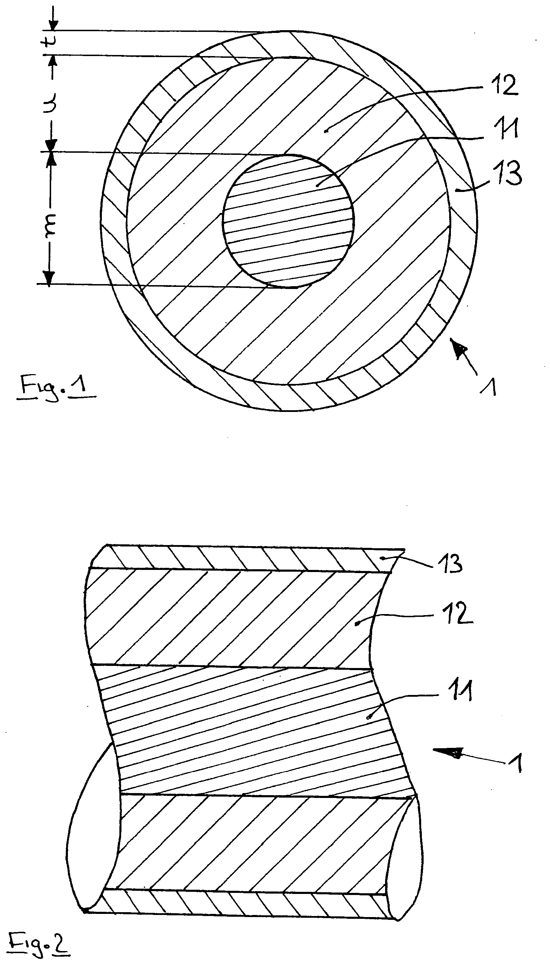

Die **Figur 1** zeigt den Querschnitt durch einen erfindungsgemäß aufgebauten Stift 1, der sich aus mindestens drei Elementen zusammensetzt. Es handelt sich um ein konzentrisch ausgebildetes System, wobei in dem Zentrum eine Mine 11 mit einem Durchmesser m ausgebildet ist, die von einer Umhüllung 12 mit einer Wandstärke u umgeben ist, aus einer Schicht aus Holzersatzstoff 12.

Um das System Mine 11 und Umhüllung 12 ist eine Traghülse 13 mit einer Wandstärke t ausgebildet bzw. angeordnet.

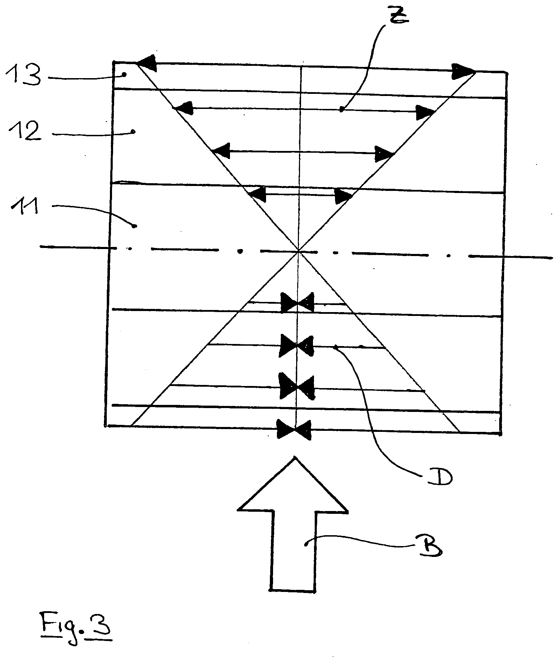

In **Figur 2** ist ein Längsschnitt durch einen erfindungsgemäßen Stift 1 gemäß der Figur 1. In dieser Ansicht ist die Minenhalterung, bestehend aus Umhüllung 12 und Traghülse 13, welche die Mine 11 umgeben, klar zu erkennen. Spannungen aufgrund einer Biegebelastung bzw. anliegenden Biegekraft B werden in der **Figur 3** dargestellt. Die Biegekraft B erzeugt in der einem Hälfte des Stiftes Druckspannungen D und in der anderen Hälfte Zugspannungen Z. Im gestauchten Bereich liegen relativ ungefährliche Druckspannungen D vor, während in der anderen Hälfte, dem gezogenen Bereich gefährliche Zugspannungen Z vorliegen bzw. auftreten. In dem gezeigten Stiftaufbau wirken im Randbereich die größten Spannungen, die aber problemlos von der Festigkeit gebenden Traghülse 13 aufgenommen werden.

Zug- und Druckspannungen aufgrund von Biegebeanspruchungen am Stift treten im Maximum an der Peripherie des Stiftes auf und nehmen zur Symmetrieachse des Stiftes gegen 0 hin ab. Die Traghülse 13 befindet sich damit an der idealen Position, Ort der maximalen Zug- und Druckspannung und kann damit einen Großteil der Spannungen aufnehmen, was das Gesamtsystem Stift 1, bestehend aus Traghülse 13, Umhüllung 12 und Mine 11, insbesondere die Mine 11, deutlich entlastet.

Es hat sich gezeigt, dass durch die Traghülse Schwankungen in der Qualität und Fertigungstoleranz des Holzersatzwerkstoffes nivelliert oder ausgeglichen werden können.

Die Zusammensetzung der Traghülse kann in der Regel aus kostengünstigeren Rohstoffen hergestellt werden, als die genau auf eine gewünschte Spitzfähigkeit und optische Ausgestaltung eingestellte Umhüllung der Mine.

Vorteilhaft bei einer derartigen Gestaltung des Stiftes ist es, dass trotz der Festigkeitssteigerung durch die Traghülse keine Beeinträchtigung der Schreibqualität auftritt, da die Mine die gleiche Zusammensetzung aufweisen bzw. beibehalten kann, wie aus dem Stand der Technik bekannt. Ganz im Gegenteil kann die Mine, insbesondere was die Schreibeigenschaften angeht, deutlich mehr optimiert werden, da ein wesentlicher Festigkeitseintrag für das Gesamtsystem durch die Traghülse erfolgt, die aufgrund des hohen E-Moduls auch die Verwendung spröderer Minen erlaubt.

Der Stiftquerschnitt kann kreisförmig, oval, drei-, sechs-, rechteckig oder nahezu beliebig gestaltet ausgebildet sein.

Liegen mehrere Traghülsen vor, so können die einzelnen Hülsen unterschiedliche Farben und/oder Zusammensetzungen aufweisen.

Um Stifte hoher Qualität herzustellen, sollten nachfolgende Randbedingungen erfüllt sein. Hierbei sollte die Traghülse eines erfindungsgemäßen Stiftes derart gestaltet sein, dass das Schwindverhalten der Traghülse dem Schwindverhalten der Umhüllung angepasst ist und dass das Traghülsenvolumen kleiner oder gleich dem Minenumhüllungsvolumen ist.

Es kann festgehalten werden, dass durch die erfindungsgemäße Ausgestaltung des Stiftes eine Erhöhung der Biegefestigkeit und Steifigkeit (E-modul) erfolgt, wodurch ein Bruch der spröden Mine durch zu starke Stiftbiegung verhindert wird.

Um die Erfindung noch deutlicher darzustellen seien nachfolgend beispielhaft Rezepturzusammensetzungen für Minenkern, Umhüllung und Traghülse angegeben.

### Rezepturbeispiel einer Farbmine - Minenkern:

| | |
|---|---|
| Polystyrol | 15 Gew. % |
| Wachse | 5 Gew. % |
| Füllstoffe und Pigmente | 80 Gew. % |

### Rezepturbeispiel eines Holzersatzwerkstoffs -Umhüllung:

| | |
|---|---|
| Holzfasern | 70 Gew. % |
| Polyolefin | 20 Gew. % |
| Haftvermittler | 5 Gew. % |
| Wachse | 5 Gew. % |

### Rezepturbeispiel einer Traghülse:

| | |
|---|---|
| Holzfasern | 70 Gew. % |
| Polyolefin | 20 Gew. % |
| Haftvermittler | 10 Gew. % |

Die Mine nach dem Beispiel ist eine polymergebundene Mine. Der Holzersatzwerkstoff ist aus einem Polymer, einer Mischung aus Polymeren, Haftvermittler, einem mit mindestens einem organischen und/oder anorganischen Füllstoff gefüllten Polymermischung gebildet, wobei das Polymer oder die Polymermischung geschäumt sein kann.

50 bis 80 Gew. % des mindestens einen Füllstoffs sind in dem gefüllten Polymer enthalten.

Beim eingesetzten Haftvermittler handelt es sich beispielsweise um ein Maleinsäuranhydrid - gepfropftes Polymer.

Aus der nachfolgenden Tabelle sollen zum besseren Verständnis bei der Erfindung eingesetzte Werkstoffe mit einem Werkstoff nach dem Stand der Technik verglichen werden.

| | **Zedernholz (Stand der Technik)** | **Holzersatzwerkstoff (Umhüllung)** | **Traghülse** |
|---|---|---|---|
| Biegebruchfestigkeit MPas | 90 | 60 | 100 |
| E-Modul MPas | 5700 | 5900 | 6700 |
| Spitzmoment in Ncm | 7 bis 12 | 10 | 18 |

Das Spitzmoment ist das Moment oder Drehmoment, welches zum Spitzen eines stab- und/oder hülsenförmigen Körpers mittels eines handelsüblichen Spitzers aufgewendet werden muss.

Der Holzersatzwerkstoff im Querschnitt senkrecht zur Längsachse des Stiftes gesehen weist bevorzugt eine Wandstärke im Bereich von 0,5 bis 2 mm, insbesondere im von Bereich 1 - 3 mm auf.

Der Durchmesser m der Mine liegt bevorzugt im Bereich von 1,5 bis 7 mm, insbesondere 2 bis 6 mm.

Die Wandstärke der Traghülse, im Querschnitt senkrecht zur Längsachse des Stiftes gesehen, weist bevorzugt eine Wandstärke t in Bereich von 0,5 bis 2 mm, insbesondere im Bereich von 0,5 bis 1 mm auf.

Zwischen der Mine und dem Holzersatzwerkstoff und/oder zwischen dem Holzersatzwerkstoff und der Traghülse kann eine Haftvermittlerschicht ausgebildet sein.

Die Traghülse kann zur optischen Ausgestaltung beitragen, indem die Hülse eingefärbt ist, insbesondere dann, wenn sie in einer Farbe der Mine oder in der Farbe des Holzwerkstoffes eingefärbt ist.

Alternativ kann die Traghülse auf ihrer dem Holzersatzwerkstoff abgewandten Seite mit einer Dekorschicht versehen ist.

Ein erfindungsgemäßer Stift kann beispielsweise durch Mehrfachextrusion hergestellt werden oder alternativ durch eine Coextrusion um eine bereits gefertigte Mine oder Minenstrang. Beispielsweise können die Mine, der Holzersatzwerkstoff und die Traghülse co-extrudiert werden.

Der Schreib-, Zeichen-, Mal- oder Kosmetikstift, umfassend eine farbabgebende Mine und eine die Mine umgebende Minenhalterung, wobei die Minenhalterung eine Umhüllung in Form eines Holzersatzwerkstoffs umfasst, welcher die Mine umgibt, wobei die Mine und die Minenhalterung zueinander verschiebesicher gehaltert sind, wobei die Minenhalterung eine Traghülse aufweist, wobei die Traghülse den Holzersatzwerkstoff umgibt und wobei die Traghülse einen gleichen oder höheren E-Modul sowie eine höhere Biegebruchfestigkeit aufweist als der Holzersatzwerkstoff.

Die Traghülse ist aus einem Polymer, einer Mischung aus Polymeren, einem mit mindestens einem organischen und/oder anorganischen Füllstoff gefüllten Polymer oder Polymergemisch gebildet, wobei der E-Modul der Traghülse bevorzugt mindestens 4000 MPa, insbesondere 5000 MPa beträgt. Die Biegebruchfestigkeit der Traghülse ist bevorzugt größer oder gleich 40 MPa, insbesondere 50 - 80 MPa.

Die Mine ist bevorzugt eine polymergebundene Mine.

Der Holzersatzwerkstoff ist aus einem Polymer, einer Mischung aus Polymeren, Haftvermittler, einem mit mindestens einem organischen und/oder anorganischen Füllstoff gefüllten Polymermischung gebildet, wobei das Polymer oder die Polymermischung bevorzugt geschäumt ist.

In dem Polymer sind 50 bis 80 Gew. % des mindestens einen Füllstoffs enthalten. Der Holzersatzwerkstoff im Querschnitt senkrecht zur Längsachse des Stiftes gesehen weist bevorzugt eine Wandstärke im Bereich von 0,5 bis 2 mm, insbesondere im Bereich 1 - 3 mm auf. Die Mine weist bevorzugt einen Durchmesser m im Bereich von 1,5 bis 7 mm, insbesondere 2 bis 6 mm und die Traghülse im Querschnitt senkrecht zur Längsachse des Stiftes gesehen bevorzugt eine Wandstärke t in Bereich von 0,5 bis 2 mm, insbesondere im Bereich von 0,5 bis 1 mm auf.

Die Traghülse ist bevorzugt eingefärbt, insbesondere in einer Farbe der Mine oder in der Farbe des Holzwerkstoffes.

Zwischen der Mine und dem Holzersatzwerkstoff und/oder zwischen dem Holzersatzwerkstoff und der Traghülse ist bevorzugt eine Haftvermittlerschicht ausgebildet.

Zudem kann die Traghülse auf ihrer dem Holzersatzwerkstoff abgewandten Seite mit einer Dekorschicht versehen sein.

Der Stift weist bevorzugt ein Spitzmoment auf, wie es ein Stift mit einer Minenhalterung aus Holz aufweist.

Die Mine, der Holzersatzwerkstoff und die Traghülse können co-extrudiert ausgebildet sein.

### Positionen

- **1**: **Stift**
11 Mine
12 Umhüllung/Minenmantel
13 Traghülse
(14) Dekorschicht

- m: = Minendurchmesser
- u: = Wandstärke der Umhüllung
- t: = Wandstärke der Traghülse

- B: = Biegekraft
- D: = Druckspannung
- Z: = Zugspannung

## Patentansprüche

1. **Schreib-, Zeichen-, Mal-und/oder Kosmetikstift,** umfassend eine farbabgebende Mine und eine die Mine umgebende Minenhalterung, wobei die Minenhalterung eine Umhüllung in Form eines Holzersatzwerkstoffs umfasst, welcher die Mine umgibt, wobei die Mine und die Minenhalterung zueinander verschiebesicher gehaltert sind, **dadurch gekennzeichnet,**
**dass** die Minenhalterung eine Umhüllung in Form eines Holzersatzwerkstoffs und eine Traghülse (13) umfasst,
**dass** die Traghülse (13) den Holzersatzwerkstoff (12) umgibt,
**dass** die Traghülse (13) aus einem mit mindestens einem organischen und/oder anorganischen Füllstoff gefüllten Polymer oder Polymergemisch gebildet ist,
**und** die Traghülse (13) einen gleichen oder höheren E-Modul sowie eine höhere Biegebruchfestigkeit aufweist als der Holzersatzwerkstoff (12)
**dass** der Holzersatzwerkstoff (12) aus einem Polymer oder einer Mischung aus Polymeren, Haftvermittler und einem mit mindestens einem organischen und/oder anorganischen Füllstoff gefüllten Polymer oder Polymermischung gebildet ist,
**und dass** im Holzersatzwerkstoff 50 bis 80 Gew. % des mindestens einen Füllstoff in dem gefüllten Polymer oder Polymermischung enthalten sind.

2. **Stift** nach Anspruch 1, **dadurch gekennzeichnet,**
**dass** der E-Modul der Traghülse (13) mindestens 4000 MPa, insbesondere 5000 MPa beträgt.

3. **Stift** nach Anspruch 1 oder 2, **dadurch gekennzeichnet,**
**dass** die Biegebruchfestigkeit der Traghülse (13) größer oder gleich 40 MPa, insbesondere 50 - 80 MPa beträgt.

4. **Stift** nach einem der Ansprüche 1 bis 3, **dadurch gekennzeichnet,**
**dass** der Holzersatzwerkstoff (12) sowie die Traghülse (13) konzentrisch zur Mine (11) angeordnet sind.

5. **Stift** nach einem der Ansprüche 1 bis 4,
**dadurch gekennzeichnet, dass** die Mine (11) eine polymergebundene Mine ist.

6. **Stift** nach einem der Ansprüche 1 bis 5,
**dadurch gekennzeichnet,**
**dass** das Polymer oder die Polymermischung geschäumt ist.

7. **Stift** nach einem der Ansprüche 1 bis 6,
**dadurch gekennzeichnet,**
**dass** der Holzersatzwerkstoff (12) im Querschnitt senkrecht zur Längsachse des Stiftes (1) gesehen eine Wandstärke im Bereich von 0,5 bis 2 mm, insbesondere im Bereich 1 - 3 mm aufweist.

8. **Stift** nach einem der Ansprüche 1 bis 7,
**dadurch gekennzeichnet,**
**dass** die Mine (11) einen Durchmesser m im Bereich von 1,5 bis 7 mm, insbesondere 2 bis 6 mm aufweist.

9. **Stift** nach einem der Ansprüche 1 bis 8,
**dadurch gekennzeichnet,**
**dass** die Traghülse (13) im Querschnitt senkrecht zur Längsachse des Stiftes (1) gesehen eine Wandstärke t in Bereich von 0,5 bis 2 mm, insbesondere im Bereich von 0,5 bis 1 mm aufweist.

10. **Stift** nach einem der Ansprüche 1 bis 9,
**dadurch gekennzeichnet,**
**dass** die Traghülse (13) eingefärbt ist, insbesondere in einer Farbe der Mine (11) oder in der Farbe des Holzwerkstoffes (12).

11. **Stift** nach einem der Ansprüche 1 bis 10,
**dadurch gekennzeichnet,**
**dass** zwischen der Mine (11) und dem Holzersatzwerkstoff (12) und/oder zwischen dem Holzersatzwerkstoff (12) und der Traghülse (13) eine Haftvermittlerschicht ausgebildet ist.

12. **Stift** nach einem der Ansprüche 1 bis 11,
**dadurch gekennzeichnet,**
**dass** die Traghülse (13) auf ihrer dem Holzersatzwerkstoff (12) abgewandten Seite mit einer Dekorschicht (14) versehen ist.

13. **Stift** nach einem der Ansprüche 1 bis12,
**dadurch gekennzeichnet,**
**dass** der Stift (1) ein Spitzmoment aufweist, wie es ein Stift (1) mit einer Minenhalterung aus Holz aufweist.

14. **Stift** nach einem der Ansprüche 1 bis 13, **dadurch gekennzeichnet, dass** die Mine (11), der Holzersatzwerkstoff (12) und die Traghülse (13) co-extrudiert ausgebildet sind.

## Claims

1. Writing, drawing, colouring and/or cosmetic pencil comprising a colour-imparting core and a core holder surrounding the core, wherein the core holder comprises a casing in the form of a wood substitute material which surrounds the core, wherein the core and the core holder are held to be secure against displacement relative to one another, **characterised in that**
the core holder comprises a casing in the form of a wood substitute material and a carrier sleeve (13),
the carrier sleeve (13) surrounds the wood substitute material (12),
the carrier sleeve (13) is formed from a polymer or polymer mixture filled with at least one organic and/or inorganic filler and
the carrier sleeve (13) has the same or higher E modulus as well as a higher bending strength than the wood substitute material (12),
the wood substitute material (12) is formed from a polymer or a mixture of polymers, adhesion promoters and a polymer or polymer mixture filled with at least one organic and/or inorganic filler, and
50 to 80 weight % of the at least one filler in the filled polymer or polymer mixture is present in the wood substitute material.

2. Pencil according to claim 1, **characterised in that** the E modulus of the carrier sleeve (13) is at least 4,000 MPa, particularly 5,000 MPa.

3. Pencil according to claim 1 or 2, **characterised in that** the bending strength of the carrier sleeve (13) is greater than or equal to 40 MPa, particularly 50 to 80 MPa.

4. Pencil according to any one of claims 1 to 3, **characterised in that** the wood substitute material (12) as well as the carrier sleeve (13) are arranged concentrically with respect to the core.

5. Pencil according to any one of claims 1 to 4, **characterised in that** the core (11) is a polymer-bound core.

6. Pencil according to any one of claims 1 to 5, **characterised in that** the polymer or the polymer mixture is foamed.

7. Pencil according to any one of claims 1 to 6, **characterised in that** the wood substitute material (12) as seen in cross-section perpendicularly to the longitudinal axis of the pencil (1) has a wall thickness in the range of 0.5 to 2 millimetres, particularly in the range of 1 to 3 millimetres.

8. Pencil according to any one of claims 1 to 7, **characterised in that** the core (11) has a diameter m in the range of 1.5 to 7 millimetres, particularly 2 to 6 millimetres.

9. Pencil according to any one of claims 1 to 8, **characterised in that** the carrier sleeve (13) as seen in cross-section perpendicular to the longitudinal axis of the pencil (1) has a wall thickness t in the range of 0.5 to 2 millimetres, particularly in the range 0.5 to 1 millimetre.

10. Pencil according to any one of claims 1 to 9, **characterised in that** the carrier sleeve (13) is coloured, particularly in a colour of the core (11) or in the colour of the wood material (12).

11. Pencil according to any one of claims 1 to 10, **characterised in that** an adhesion-promoting layer is formed between the core (11) and the wood substitute material (12) and/or between the wood substitute material (12) and the carrier sleeve (13).

12. Pencil according to any one of claims 1 to 11, **characterised in that** the carrier sleeve (13) is provided with a decorative layer (14) on its side remote from the wood substitute material (12).

13. Pencil according to any one of claims 1 to 12, **characterised in that** the pencil (1) has a pointed moment like a pencil (1) with a core holder of wood.

14. Pencil according to any one of claims 1 to 13, **characterised in that** the core (11), the wood substitute material (12) and carrier sleeve (13) are formed to be co-extruded.

## Revendications

1. Stylet d'écriture, de dessin, de peinture et/ou pour applications cosmétiques, comprenant une mine à effet de coloration et un porte-mine entourant ladite mine, lequel porte-mine comporte une enveloppe revêtant la forme d'un matériau substitutif du bois entourant la mine, ladite mine et ledit porte-mine étant retenus avec impossibilité de déplacement mutuel,
**caractérisé par le fait**
**que** le porte-mine inclut une enveloppe revêtant la forme d'un matériau substitutif du bois, et un manchon de support (13) ;
**que** le manchon de support (13) entoure ledit matériau (12) substitutif du bois ;
**que** ledit manchon de support (13) est constitué d'un polymère ou d'un mélange de polymères chargé d'au moins une substance de remplissage organique et/ou minérale,
et ledit manchon de support (13) présente, par rapport audit matériau (12) substitutif du bois, un module d'élasticité égal ou supérieur, ainsi qu'une plus grande résistance à la rupture par flexion ;
**que** ledit matériau (12) substitutif du bois est constitué d'un polymère ou d'un mélange de polymères, d'un agent d'adhérence, et d'un polymère ou d'un mélange de polymères chargé d'au moins une substance de remplissage organique et/ou minérale ;
et **que** ledit matériau substitutif du bois renferme de 50 à 80 % en poids de la substance de remplissage à présence minimale dans ledit polymère ou mélange de polymères chargé.

2. Stylet selon la revendication 1,
**caractérisé par le fait**
**que** le module d'élasticité du manchon de support (13) est d'au moins 4 000 MPa, notamment de 5 000 MPa.

3. Stylet selon la revendication 1 ou 2,
**caractérisé par le fait**
**que** la résistance du manchon de support (13) à la rupture par flexion est supérieure ou égale à 40 MPa, notamment de 50 - 80 MPa.

4. Stylet selon l'une des revendications 1 à 3,
**caractérisé par le fait**
**que** le matériau (12) substitutif du bois, ainsi que le manchon de support (13), sont disposés concentriquement par rapport à la mine (11).

5. Stylet selon l'une des revendications 1 à 4,
**caractérisé par le fait**
**que** la mine (11) est une mine à liaison polymère.

6. Stylet selon l'une des revendications 1 à 5,
**caractérisé par le fait**
**que** le polymère, ou le mélange de polymères, est soumis à expansion.

7. Stylet selon l'une des revendications 1 à 6,
**caractérisé par le fait**
**que** le matériau (12) substitutif du bois présente, observé en coupe transversale perpendiculairement à l'axe longitudinal dudit stylet (1), une épaisseur de paroi située dans la plage de 0,5 à 2 mm, notamment dans la plage 1 - 3 mm.

8. Stylet selon l'une des revendications 1 à 7,
**caractérisé par le fait**
**que** la mine (11) présente un diamètre m situé dans la plage de 1,5 à 7 mm, notamment de 2 à 6 mm.

9. Stylet selon l'une des revendications 1 à 8,
**caractérisé par le fait**
**que** le manchon de support (13) présente, observé en coupe transversale perpendiculairement à l'axe longitudinal dudit stylet (1), une épaisseur de paroi t située dans la plage de 0,5 à 2 mm, notamment dans la plage de 0,5 à 1 mm.

10. Stylet selon l'une des revendications 1 à 9,
**caractérisé par le fait**
**que** le manchon de support (13) est coloré dans la masse, en particulier dans une couleur de la mine (11) ou dans la couleur du matériau (12) en bois.

11. Stylet selon l'une des revendications 1 à 10,
**caractérisé par le fait**
**qu'**une couche d'agent d'adhérence est formée entre la mine (11) et le matériau (12) substitutif du bois, et/ou entre ledit matériau (12) substitutif du bois et le manchon de support (13).

12. Stylet selon l'une des revendications 1 à 11,
**caractérisé par le fait**
**que** le manchon de support (13) est pourvu d'une couche décorative (14) sur son côté pointant à l'opposé du matériau (12) substitutif du bois.

13. Stylet selon l'une des revendications 1 à 12,
**caractérisé par le fait**
**que** ledit stylet (1) présente un couple d'affûtage analogue à celui d'un stylet (1) muni d'un porte-mine en bois.

14. Stylet selon l'une des revendications 1 à 13,
**caractérisé par le fait**
**que** la mine (11), le matériau (12) substitutif du bois et le manchon de support (13) sont de réalisation coextrudée.
